# EUROPEAN PATENT SPECIFICATION

(11) **EP 2 801 926 B1**
(45) Date of publication and mention of the grant of the patent: **30.12.2020**
(21) Application number: 14157627.2
(22) Date of filing: 04.03.2014
(51) Int. Cl.: H04L 9/00, G06F 21/57, G06F 21/64, H04L 9/32

(54) **USE OF MULTIPLE DIGITAL SIGNATURES AND QUORUM RULES TO VERIFY AIRCRAFT INFORMATION**
Verwendung mehrerer digitaler Signaturen und Quorum-Regeln zur Überprüfung von Flugzeuginformationen
Utilisation de signatures numériques multiples et de règles de quorum afin de vérifier les informations relatives à un aéronef

(30) Priority: 07.05.2013 US 201313888730
(43) Date of publication of application: 12.11.2014
(73) Proprietor: The Boeing Company, Chicago, IL 60606-1596 (US)
(72) Inventor: Kimberly, Greg A., Seattle, WA 98124-2207 (US); Angus, Ian Gareth, Seattle, WA 98124-2207 (US)
(74) Representative: Shipp, Nicholas

(56) References cited:
- EP-A1- 1 879 122
- US-A1- 2007 234 047
- US-A1- 2009 106 560
- US-A1- 2009 138 874
- US-A1- 2009 235 071
- US-A1- 2013 042 105

## Description

### BACKGROUND

The present disclosure relates generally to systems and methods for verifying the authenticity and integrity of information used on aircraft. More particularly, the present disclosure relates to the use of multiple digital signatures to verify the authenticity and integrity of information used on an aircraft.

Modern aircraft are extremely complex. For example, an aircraft may have many types of electronic systems on-board. These systems are often in the form of line-replaceable units (LRUs). A line-replaceable unit is an item that can be removed and replaced from an aircraft. A line-replaceable unit is designed to be easily replaceable.

A line-replaceable unit may take on various forms. A line-replaceable unit on an aircraft may be, for example, without limitation, a flight management system, an autopilot, an in-flight entertainment system, a communications system, a navigation system, a flight controller, a flight recorder, a collision avoidance system, a system to support maintenance functions, or a system to support crew processes. The various line-replaceable units on an aircraft may be parts of an aircraft network data processing system.

Line-replaceable units may use software or programming to provide the logic or control for various operations and functions. Typically, software on an aircraft is treated as one or more separate parts or is combined with a hardware part and is unchangeable without changing the hardware part number. Aircraft software that is treated as an aircraft part may be referred to as a loadable aircraft software part or an aircraft software part. Aircraft software parts are parts of the configuration of an aircraft.

Aircraft operators are entities that operate aircraft. Aircraft operators also may be responsible for the maintenance and repair of aircraft. Examples of aircraft operators include airlines and military units. When an aircraft operator receives an aircraft, aircraft software parts may already be installed in the line-replaceable units on the aircraft.

An aircraft operator may also receive copies of loaded aircraft software parts in case the parts need to be reinstalled or reloaded into the line-replaceable units on the aircraft. Reloading of aircraft software parts may be required, for example, if a line-replaceable unit in which the software is used is replaced or repaired. Further, the aircraft operator also may receive updates to the aircraft software parts from time to time. These updates may include additional features not present in the currently-installed aircraft software parts and may be considered upgrades to one or more line-replaceable units. Specified procedures may be followed during loading of an aircraft software part on an aircraft such that the current configuration of the aircraft, including all of the aircraft software parts loaded on the aircraft, is known.

It may be desirable that only approved software and other data from trusted suppliers is used on an aircraft. Unapproved software and other data may include data that is corrupted, data that is infected with a virus, or other unapproved data. Unapproved software and other data may affect the operation of the aircraft in undesired ways.

Data processing networks may employ digital certificates in a public key infrastructure to ensure that only approved software and other data are used on the network. Such digital certificates also may be known as public key certificates or identity certificates. The digital certificates are issued by a certificate authority that is trusted by the network. The digital certificate identifies the source of the software or other data to the network in a manner that can be trusted. The network may use the digital certificate to determine whether or not the software or other data will be used on the network.

Current systems and methods for verifying the authenticity and integrity of software and other data for use on entirely ground-based computer networks may not be applied effectively to mobile systems, such as aircraft. The particular environment in which network data processing systems on aircraft are operated and maintained may make it difficult or impossible to use such current methods for validating software or other data for use on an aircraft network data processing system.

Accordingly, it would be desirable to have a method and apparatus that takes into account one or more of the issues discussed above as well as possibly other issues.

EP 1879122 discloses a public key of a certification authority for verifying authenticity of a called code module, determined from information included in the calling code module. A signer certificate is retrieved from the called code module. The signer certificate is based on a public signing key associated with the provider of the called code module and encrypted using a private key of the certification authority. Using the public key of the certification authority, the signer certificate is verified. From the called code module, a code signature is retrieved. The code signature is based on code of the called code module and encrypted using a private key associated with the provider of the called code module. Using the public signing key associated with the provider of the called code module, the code signature is verified.

US 2007/234047 discloses an apparatus for use in implementing encrypted communications using a digital certificate. The apparatus is configured to include a memory storing therein the digital certificate; and a selective-transmit controller, upon receipt of a request from a requester for the encrypted communications using the digital certificate, determining whether or not the digital certificate is valid, transmitting the digital certificate to the requestor if the digital certificate is valid, and not transmitting the digital certificate to the requester if the digital certificate is not valid.

US 2009/106560 discloses a method for processing an operating computer file of an equipment item installed on board an aircraft, especially for ensuring the security thereof, the method comprising the digital signature of the said computer file by means of a least one first private key, the said first private key being generated according to a scheme based on the identity of a first entity.

US 2009/235071 discloses a system and method for assigning certificates and reducing the size of the certificate revocation lists in a PKI based architecture for a vehicle wireless communications system that includes separating a country, or other area, into geographic regions and assigning region-specific certificates to the vehicles.

US 2013/0042105, according to its abstract states "Two approaches for distributing trust among a set of certificate authorities. Each approach may be used to secure data in motion. One approach provides methods and systems in which the secure data parser is used to distribute trust in a set of certificate authorities during initial negotiation (e.g., the key establishment phase) of a connection between two devices. Another approach provides methods and systems in which the secure data parser is used to disperse packets of data into shares. A set of tunnels is established within a communication channel using a set of certificate authorities, keys developed during the establishment of the tunnels are used to encrypt shares of data for each of the tunnels, and the shares of data are transmitted through each of the tunnels. Accordingly, trust is distributed among a set of certificate authorities in the structure of the communication channel itself.".

### SUMMARY

An embodiment of the present disclosure provides a method for verifying data for use on an aircraft. A plurality of digital certificates associated with the data is received by a processor unit. The processor unit selects a quorum rule in response to a determination that a specified certificate authority may have been compromised. The processor unit verifies the data for use on the aircraft using a selected number of the plurality of digital certificates by determining whether at least a specified number of the selected number of the plurality of digital certificates is valid. The specified number is defined by the quorum rule.

Another embodiment of the present disclosure provides an apparatus comprising a processor unit configured to implement a data verification module. The data verification module is configured to receive a plurality of digital certificates associated with data for use on an aircraft, to select a quorum rule in response to a determination that a specified certificate authority may have been compromised, and to verify the data for use on the aircraft using a selected number of the plurality of digital certificates by determining whether at least a specified number of the selected number of the plurality of digital certificates is valid. The specified number is defined by the quorum rule.

An example of the present disclosure provides a method for verifying data for use on an aircraft. Data for use on the aircraft is received by a processor unit. The processor unit generates a plurality of digital certificates for the data. The data and the plurality of digital certificates are sent to the aircraft.

The features and functions can be achieved independently in various embodiments of the present disclosure or may be combined in yet other embodiments in which further details can be seen with reference to the following description and drawings.

### BRIEF DESCRIPTION OF THE DRAWINGS

The novel features believed characteristic of the illustrative embodiments are set forth in the appended claims. The illustrative embodiments, however, as well as a preferred mode of use, further objectives, and features thereof will best be understood by reference to the following detailed description of illustrative embodiments of the present disclosure when read in conjunction with the accompanying drawings, wherein:
**Figure 1** is an illustration of a block diagram of an aircraft maintenance environment in accordance with an illustrative embodiment;
**Figure 2** is an illustration of a block diagram of quorum rules in accordance with an illustrative embodiment;
**Figure 3** is an illustration of a block diagram of data verification using a plurality of digital certificates and a list of acceptable certificate authorities in accordance with an illustrative embodiment;
**Figure 4** is an illustration of a block diagram of data verification using a plurality of digital certificates and quorum rules in accordance with an illustrative embodiment;
**Figure 5** is an illustration of a block diagram of data verification in response to a compromised certificate authority in accordance with an illustrative embodiment;
**Figure 6** is an illustration of a flowchart of a process for signing data for use on an aircraft in accordance with an illustrative embodiment;
**Figure 7** is an illustration of a flowchart of a process for verifying data for use on an aircraft in accordance with an illustrative embodiment; and
**Figure 8** is an illustration of a data processing system in accordance with an illustrative embodiment.

### DETAILED DESCRIPTION

The different illustrative embodiments recognize and take into account a number of different considerations. "A number," as used herein with reference to items, means one or more items. For example, "a number of different considerations" means one or more different considerations.

The different illustrative embodiments recognize and take into account that current public key infrastructure systems may be structured around singular root certificate authority-derived certificates. The use of singular certificates may create a system where misconfiguration or attack can effectively cause the system to cease to operate.

The different illustrative embodiments also recognize and take into account that an operator of an aircraft may prefer certain certificate authorities and may not trust other certificate authorities. Therefore, it may be desirable to allow an aircraft operator to use certificates from certificate authorities that are acceptable to the operator to verify software and other data for use on aircraft operated by that operator.

The different illustrative embodiments also recognize and take into account that audit techniques may exist that may make it possible to discover the compromise of a root certificate authority. It may be desirable to take into account the known or suspected compromise of a certificate authority for the verification of software or other data for use on an aircraft.

Therefore, one or more of the illustrative embodiments provide a system and method for validating the authenticity and integrity of software and other data for use on an aircraft using a plurality of digital certificates from a plurality of certificate authorities. In accordance with illustrative embodiments, software or other data may be validated for use on the aircraft if a number of the plurality of certificates associated with the data that satisfies a quorum rule is determined to be valid. The rules defining the quorum required for validation may be selected in response to a determination that a specified certificate authority may have been compromised.

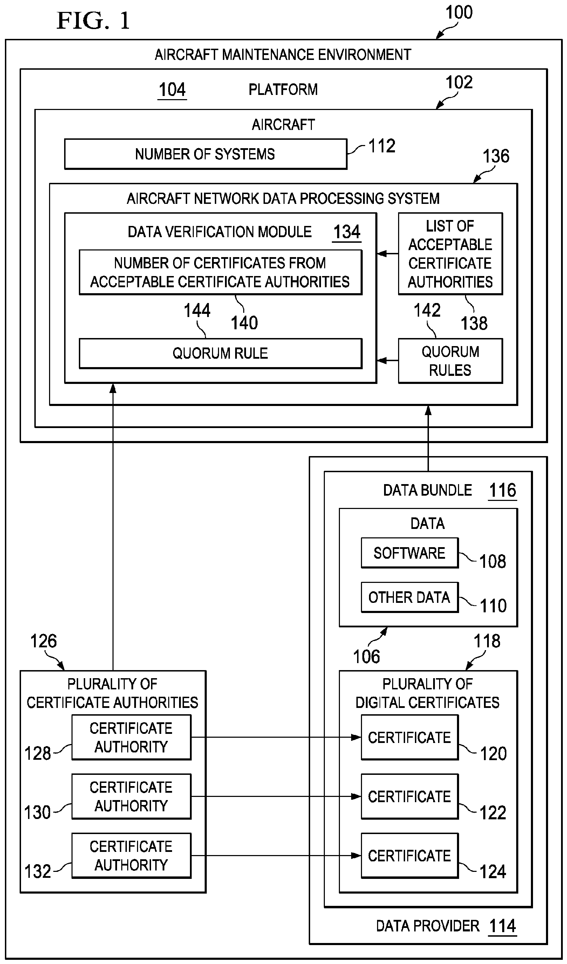

Turning now to **Figure 1**, an illustration of a block diagram of an aircraft maintenance environment is depicted in accordance with an illustrative embodiment. In this example, aircraft maintenance environment **100** may be configured for the maintenance of aircraft **102.**

Aircraft **102** may be any appropriate type of aircraft. For example, without limitation, aircraft **102** may be a commercial or private passenger aircraft, a cargo aircraft, a military or other government aircraft, or any other aircraft configured for any appropriate purpose or mission. Aircraft **102** may be a fixed wing, rotary wing, or lighter than air aircraft. Aircraft **102** may be a manned aircraft or an unmanned air vehicle.

Aircraft **102** is one example of platform **104** in which an illustrative embodiment may be implemented. Platform **104** may be a vehicle or other mobile structure. For example, without limitation, platform **104** may be an aerospace vehicle that is capable of traveling through the air, in space, or both. As another example, without limitation, platform **104** may be a vehicle that is capable of traveling on land, on the surface of water, underwater, or in any other medium or combination of media. In another illustrative embodiment, platform **104** may be a static system. For example, without limitation, platform **104** may be an industrial control system or other generally non-mobile system.

Aircraft **102** may use data **106** for operation of aircraft **102.** For example, data **106** may include software **108,** other data **110,** or various combinations of data. For example, without limitation, software **108** may include aircraft software parts for use on line-replaceable units on aircraft **102.** For example, without limitation, other data **110** may include mapping data or other data or combinations of data for use by aircraft **102.**

Data **106** may be used by number of systems **112** on aircraft **102.** For example, without limitation, number of systems **112** may include automatic pilot, flight management, communications, health management, other systems, or various combinations of systems for performing various functions on aircraft **102.**

Data **106** may be provided by data provider **114.** Data provider **114** may be any entity that has authority to provide data **106** for use on aircraft **102** or to load data **106** on aircraft **102.** For example, without limitation, data provider **114** may include a software supplier, an aircraft maintenance entity, an aircraft operator, an aircraft manufacturer, or any other entity or combination of entities authorized to provide data **106** for use on aircraft **102.** Data provider **114** may be any entity or combination of entities that is responsible for maintaining aircraft **102.** Data provider **114** may or may not be the owner of aircraft **102.** Data provider **114** may include an entity acting on behalf of the owner of aircraft **102** to provide data **106** for use on aircraft **102.**

Data provider **114** may provide data **106** in data bundle **116** for loading on aircraft **102.** For example, data bundle **116** may include data **106** along with plurality of digital certificates **118** for data **106.** In this example, without limitation, plurality of digital certificates **118** may include certificate **120,** certificate **122,** and certificate **124.** Plurality of digital certificates **118** may include any appropriate number of digital certificates. For example, plurality of digital certificates **118** may include two or more than three digital certificates.

Plurality of digital certificates **118** may be from plurality of certificate authorities **126.** For example, certificate **120** may be from certificate authority **128.** Certificate **122** may be from certificate authority **130.** Certificate **124** may be from certificate authority **132.**

Data verification module **134** may be configured to use plurality of digital certificates **118** to verify data **106** for use on aircraft **102.** For example, data verification module **134** may be implemented in aircraft network data processing system **136** on aircraft **102.**

Data verification module **134** may be configured to use list of acceptable certificate authorities **138** to identify number of certificates from acceptable certificate authorities **140** to use to verify data **106** for use on aircraft **102.** The quantity of plurality of digital certificates **118** that must be determined to be valid in order for data **106** to be verified may be defined by quorum rules **142.** Data verification module **134** may be configured to select quorum rule **144** from quorum rules **142** for the verification of data **106** based on number of systems **112** on which data **106** will be used, location of aircraft **102** when data **106** is loaded on aircraft **102,** other factors, or various combinations of factors.

The illustration of **Figure 1** is not meant to imply physical or architectural limitations to the manner in which different illustrative embodiments may be implemented. Other components in addition to, in place of, or both in addition to and in place of the ones illustrated may be used. Some components may be unnecessary in some illustrative embodiments. Also, the blocks are presented to illustrate some functional components. One or more of these blocks may be combined or divided into different blocks when implemented in different illustrative embodiments.

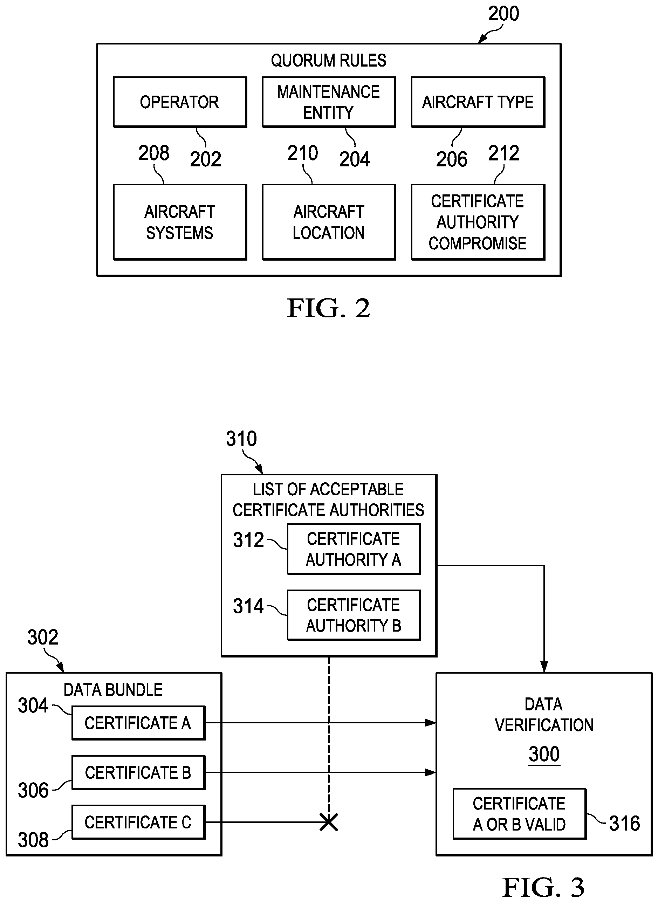

Turning now to **Figure 2****,** an illustration of a block diagram of quorum rules is depicted in accordance with an illustrative embodiment. In this example, quorum rules **200** may be an example of one implementation of quorum rules **142** in **Figure 1****.**

Quorum rules **200** may be defined for various characteristics or conditions of an aircraft. For example, without limitation, quorum rules **200** may be defined for operator **202** of an aircraft, for aircraft maintenance entity **204,** for aircraft type **206,** for aircraft systems **208** on which data will be used, for aircraft location **210,** or for various other characteristics or combinations of characteristics of an aircraft. Specific quorum rules **200** may be defined for use in response to known or suspected certificate authority compromise **212.**

Turning now to **Figure 3****,** an illustration of a block diagram of data verification using a plurality of digital certificates and a list of acceptable certificate authorities is depicted in accordance with an illustrative embodiment. For example, data verification **300** may be performed using data verification module **134** in **Figure 1****.**

In this example, data bundle **302** to be verified may include certificate A **304,** certificate B **306,** and certificate C **308.** List of acceptable certificate authorities **310** may indicate that only certificates from certificate authority A **312** and certificate authority B **314** are acceptable to use for data verification **300.** In this case, certificate C **308** is not from either certificate authority A **312** or certificate authority B **314.** Therefore, certificate C **308** will not be used for data verification **300.** In this example, data bundle **302** may be verified in response to a determination of certificate A or B valid **316.**

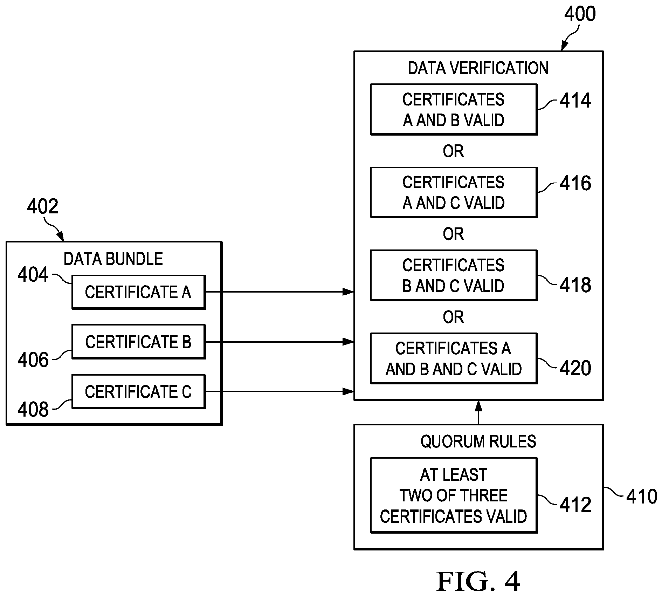

Turning now to **Figure 4****,** an illustration of a block diagram of data verification using a plurality of digital certificates and quorum rules is depicted in accordance with an illustrative embodiment. For example, data verification **400** may be performed using data verification module **134** in **Figure 1****.**

In this example, data bundle **402** to be verified may include certificate A **404,** certificate B **406,** and certificate C **408.** Quorum rules **410** may indicate that data bundle **402** may be verified if at least two of three certificates is valid **412.** Therefore, in this example, data bundle **402** may be verified in response to a determination of certificates A and B valid **414,** certificates A and C valid **416,** certificates B and C valid **418,** or certificates A and B and C valid **420.**

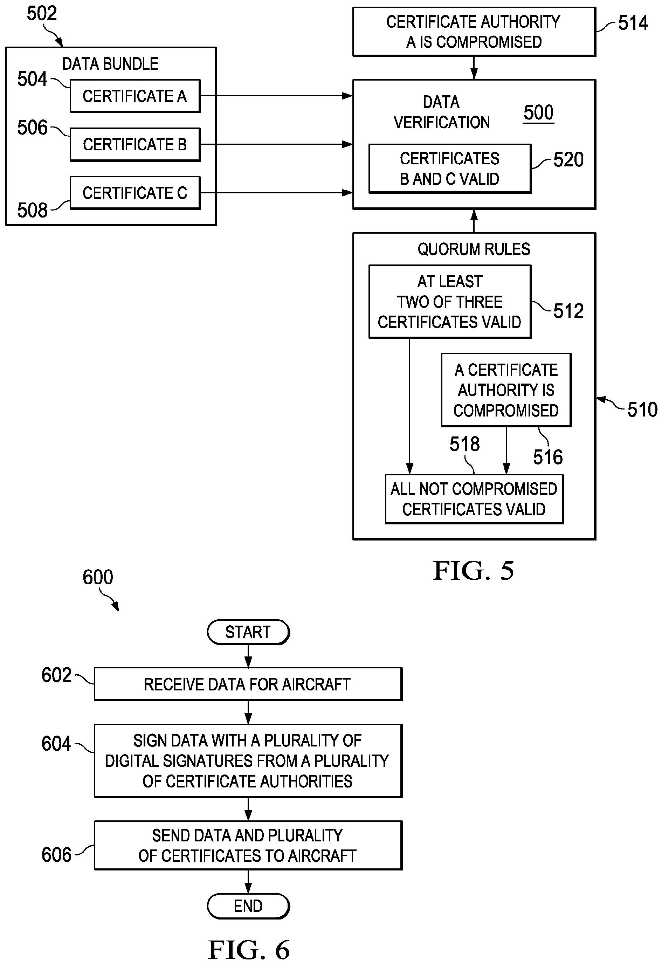

Turning now to **Figure 5****,** an illustration of a block diagram of data verification in response to a compromised certificate authority is depicted in accordance with an illustrative embodiment. For example, data verification **500** may be performed using data verification module **134** in **Figure 1****.**

In this example, data bundle **502** to be verified may include certificate A **504,** certificate B **506,** and certificate C **508.** Quorum rules **510** may indicate that data bundle **502** may be verified if at least two of three certificates is valid **512.** However, in this case, available information indicates that certificate authority A is compromised **514.** Quorum rules **510** also indicate that if a certificate authority is compromised **516,** then the appropriate quorum rule to use is changed from at least two of three certificates valid **512** to all not compromised valid **518.** Therefore, in this example, data bundle **502** may be verified only in response to a determination of certificates B and C valid **520.**

Turning now to **Figure 6****,** an illustration of a flowchart of a process for signing data for use on an aircraft is depicted in accordance with an illustrative embodiment. For example, without limitation, process **600** may be performed by data provider **114** in **Figure 1****.**

Data for an aircraft may be received (operation **602**). The data may be signed with a plurality of digital signatures from a plurality of certificate authorities (operation **604**). The data and the plurality of certificates then may be sent to the aircraft (operation **606**), with the process terminating thereafter.

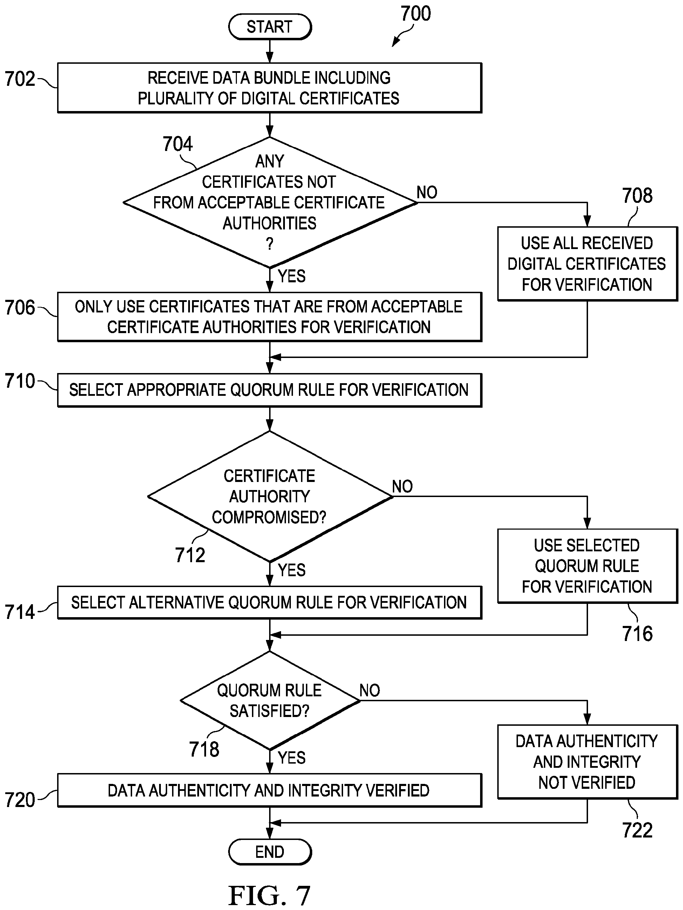

Turning now to **Figure 7****,** an illustration of a flowchart of a process for verifying data for use on an aircraft is depicted in accordance with an illustrative embodiment. In this example, process **700** may be performed by data verification module **134** in **Figure 1****.**

A data bundle including a plurality of digital certificates is received (operation **702**). It may be determined whether any of the certificates are not from acceptable certificate authorities (operation **704**). If it is determined that any of the certificates are not from acceptable certificate authorities, only the certificates that are from acceptable certificate authorities may be used for verification of the data bundle (operation **706**). Otherwise, all of the received digital certificates may be used for verification (operation **708**).

An appropriate quorum rule for verification may be selected (operation **710**). It may be determined whether there is any indication that a certificate authority may have been compromised (operation **712**). An alternative quorum rule may be selected for verification in response to a determination that a certificate authority may have been compromised (operation **714**). Otherwise, the quorum rule selected in operation **710** may be used for verification (operation **716**).

It then may be determined whether the selected quorum rule is satisfied (operation **718**). If the selected quorum rule is satisfied, data authenticity and integrity may be considered to be verified (operation **720**), with the process terminating thereafter. Otherwise, data authenticity and integrity may not be verified (operation **722**), with the process terminating thereafter.

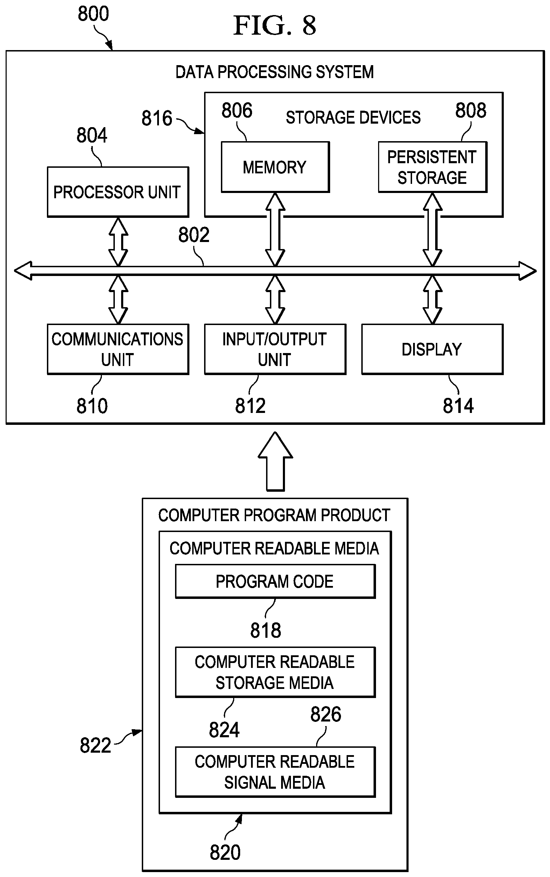

Turning now to **Figure 8****,** an illustration of a data processing system is depicted in accordance with an illustrative embodiment. In this example, data processing system **800** is an example of one implementation of a data processing system on aircraft network data processing system **136** in **Figure 1****.** Data processing system **800** is an example of one implementation of a data processing system on which data verification module **134** in **Figure 1** may be implemented.

In this illustrative example, data processing system **800** includes communications fabric **802.** Communications fabric **802** provides communications between processor unit **804,** memory **806,** persistent storage **808,** communications unit **810,** input/output (I/O) unit **812,** and display **814.** Memory **806,** persistent storage **808,** communications unit **810,** input/output (I/O) unit **812,** and display **814** are examples of resources accessible by processor unit **804** via communications fabric **802.**

Processor unit **804** serves to run instructions for software that may be loaded into memory **806.** Processor unit **804** may be a number of processors, a multi-processor core, or some other type of processor, depending on the particular implementation. Further, processor unit **804** may be implemented using a number of heterogeneous processor systems in which a main processor is present with secondary processors on a single chip. As another illustrative example, processor unit **804** may be a symmetric multi-processor system containing multiple processors of the same type.

Memory **806** and persistent storage **808** are examples of storage devices **816.** A storage device is any piece of hardware that is capable of storing information such as, for example, without limitation, data, program code in functional form, and other suitable information either on a temporary basis or a permanent basis. Storage devices **816** may also be referred to as computer readable storage devices in these examples. Memory **806,** in these examples, may be, for example, a random access memory or any other suitable volatile or non-volatile storage device. Persistent storage **808** may take various forms, depending on the particular implementation.

For example, persistent storage **808** may contain one or more components or devices. For example, persistent storage **808** may be a hard drive, a flash memory, a rewritable optical disk, a rewritable magnetic tape, or some combination of the above. The media used by persistent storage **808** also may be removable. For example, a removable hard drive may be used for persistent storage **808.**

Communications unit **810,** in these examples, provides for communications with other data processing systems or devices. In these examples, communications unit **810** is a network interface card. Communications unit **810** may provide communications through the use of either or both physical and wireless communications links.

Input/output unit **812** allows for input and output of data with other devices that may be connected to data processing system **800.** For example, input/output unit **812** may provide a connection for user input through a keyboard, a mouse, and/or some other suitable input device. Further, input/output unit **812** may send output to a printer. Display **814** provides a mechanism to display information to a user.

Instructions for the operating system, applications, and/or programs may be located in storage devices **816,** which are in communication with processor unit **804** through communications fabric **802.** In these illustrative examples, the instructions are in a functional form on persistent storage **808.** These instructions may be loaded into memory **806** for execution by processor unit **804.** The processes of the different embodiments may be performed by processor unit **804** using computer-implemented instructions, which may be located in a memory, such as memory **806.**

These instructions are referred to as program instructions, program code, computer usable program code, or computer readable program code that may be read and executed by a processor in processor unit **804.** The program code in the different embodiments may be embodied on different physical or computer readable storage media, such as memory **806** or persistent storage **808.**

Program code **818** is located in a functional form on computer readable media **820** that is selectively removable and may be loaded onto or transferred to data processing system **800** for execution by processor unit **804.** Program code **818** and computer readable media **820** form computer program product **822** in these examples. In one example, computer readable media **820** may be computer readable storage media **824** or computer readable signal media **826.**

Computer readable storage media **824** may include, for example, an optical or magnetic disk that is inserted or placed into a drive or other device that is part of persistent storage **808** for transfer onto a storage device, such as a hard drive, that is part of persistent storage **808.** Computer readable storage media **824** also may take the form of a persistent storage, such as a hard drive, a thumb drive, or a flash memory, that is connected to data processing system **800.** In some instances, computer readable storage media **824** may not be removable from data processing system **800.**

In these examples, computer readable storage media **824** is a physical or tangible storage device used to store program code **818** rather than a medium that propagates or transmits program code **818.** Computer readable storage media **824** is also referred to as a computer readable tangible storage device or a computer readable physical storage device. In other words, computer readable storage media **824** is a media that can be touched by a person.

Alternatively, program code **818** may be transferred to data processing system **800** using computer readable signal media **826.** Computer readable signal media **826** may be, for example, a propagated data signal containing program code **818.** For example, computer readable signal media **826** may be an electromagnetic signal, an optical signal, or any other suitable type of signal. These signals may be transmitted over communications links, such as wireless communications links, optical fiber cable, coaxial cable, a wire, or any other suitable type of communications link. In other words, the communications link or the connection may be physical or wireless in the illustrative examples.

In some illustrative embodiments, program code **818** may be downloaded over a network to persistent storage **808** from another device or data processing system through computer readable signal media **826** for use within data processing system **800.** For instance, program code stored in a computer readable storage medium in a server data processing system may be downloaded over a network from the server to data processing system **800.** The data processing system providing program code **818** may be a server computer, a client computer, or some other device capable of storing and transmitting program code **818.**

The different components illustrated for data processing system **800** are not meant to provide architectural limitations to the manner in which different embodiments may be implemented. The different illustrative embodiments may be implemented in a data processing system including components in addition to and/or in place of those illustrated for data processing system **800.** Other components shown in **Figure 8** can be varied from the illustrative examples shown. The different embodiments may be implemented using any hardware device or system capable of running program code. As one example, data processing system **800** may include organic components integrated with inorganic components and/or may be comprised entirely of organic components excluding a human being. For example, a storage device may be comprised of an organic semiconductor.

In another illustrative example, processor unit **504** may take the form of a hardware unit that has circuits that are manufactured or configured for a particular use. This type of hardware may perform operations without needing program code to be loaded into a memory from a storage device to be configured to perform the operations.

For example, when processor unit **804** takes the form of a hardware unit, processor unit **804** may be a circuit system, an application specific integrated circuit (ASIC), a programmable logic device, or some other suitable type of hardware configured to perform a number of operations. With a programmable logic device, the device is configured to perform the number of operations. The device may be reconfigured at a later time or may be permanently configured to perform the number of operations. Examples of programmable logic devices include, for example, a programmable logic array, a programmable array logic, a field programmable logic array, a field programmable gate array, and other suitable hardware devices. With this type of implementation, program code **818** may be omitted, because the processes for the different embodiments are implemented in a hardware unit.

In still another illustrative example, processor unit **804** may be implemented using a combination of processors found in computers and hardware units. Processor unit **804** may have a number of hardware units and a number of processors that are configured to run program code **818.** With this depicted example, some of the processes may be implemented in the number of hardware units, while other processes may be implemented in the number of processors.

In another example, a bus system may be used to implement communications fabric **802** and may be comprised of one or more buses, such as a system bus or an input/output bus. Of course, the bus system may be implemented using any suitable type of architecture that provides for a transfer of data between different components or devices attached to the bus system.

Additionally, communications unit **810** may include a number of devices that transmit data, receive data, or transmit and receive data. Communications unit **810** may be, for example, a modem or a network adapter, two network adapters, or some combination thereof. Further, a memory may be, for example, memory **806,** or a cache, such as found in an interface and memory controller hub that may be present in communications fabric **802.**

The description of the different illustrative embodiments has been presented for purposes of illustration and description and is not intended to be exhaustive or to limit the embodiments in the form disclosed. Many modifications and variations will be apparent to those of ordinary skill in the art. Further, different illustrative embodiments may provide different features as compared to other illustrative embodiments. The embodiment or embodiments selected are chosen and described in order to best explain the principles of the embodiments, the practical application, and to enable others of ordinary skill in the art to understand the disclosure for various embodiments with various modifications as are suited to the particular use contemplated. The invention to which this European patent relates is defined by the appended claims.

## Claims

1. A method for verifying data (106) for use on an aircraft (102), comprising:
receiving, by a processor unit (804), a plurality of digital certificates (118) associated with the data (106);
selecting, by the processor unit, a quorum rule (144) in response to a determination that a specified certificate authority may have been compromised; and
verifying, by the processor unit (804), the data (106) for use on the aircraft (102) using a selected number of the plurality of digital certificates (118) by determining whether at least a specified number of the selected number of the plurality of digital certificates (118) is valid;
wherein the specified number is defined by the quorum rule.

2. The method of claim 1, wherein the plurality of digital certificates (118) is from a plurality of certificate authorities (126) and further comprising selecting the selected number of the plurality of digital certificates (118) using a list of acceptable certificate authorities (138).

3. The method of claim 1 further comprising:
selecting the quorum rule (144) from a plurality of quorum rules (142) based on a system on the aircraft (102) on which the data (106) will be used.

4. The method of claim 1 further comprising:
selecting the quorum rule (144) from a plurality of quorum rules (142) based on a location of the aircraft (102) .

5. The method of claim 1, wherein the data (106) comprises software (108) for use on the aircraft (102).

6. The method of claim 1, wherein the processor unit (804) is a processor unit (804) in an aircraft network data processing system (136) on the aircraft (102).

7. An apparatus, comprising a processor unit (804) configured to implement:
a data verification module (134) configured to receive a plurality of digital certificates (118) associated with data (106) for use on an aircraft (102), to select a quorum rule (144) in response to a determination that a specified certificate authority may have been compromised, and to verify the data (106) for use on the aircraft (102) using a selected number of the plurality of digital certificates (118) by determining whether at least a specified number of the selected number of the plurality of digital certificates (118) is valid;
wherein the specified number is defined by the quorum rule.

8. The apparatus of claim 7, wherein the plurality of digital certificates (118) is from a plurality of certificate authorities (126) and wherein the data verification module (134) is further configured to select the selected number of the plurality of digital certificates (118) using a list of acceptable certificate authorities (138) .

9. The apparatus of claim 7, wherein the data verification module (134) is configured to select the quorum rule (144) from a plurality of quorum rules (142) based on a system on the aircraft (102) on which the data (106) will be used.

10. The apparatus of claim 7, wherein the data verification module (134) is configured to select the quorum rule (144) from a plurality of quorum rules (142) based on a location of the aircraft (102) and further wherein the data verification module (134) is implemented in an aircraft network data processing system (136) on the aircraft (102).

11. The apparatus of claim 7, wherein the data (106) comprises software (108) for use on the aircraft (102).

## Patentansprüche

1. Verfahren zum Verifizieren von Daten (106) für die Verwendung in einem Flugzeug (102), das Folgendes aufweist:
Empfangen, durch eine Prozessoreinheit (804), einer Vielzahl von digitalen Zertifikaten (118), die mit den Daten (106) assoziiert sind;
Auswählen, durch die Prozessoreinheit, einer Quorum-Regel (144) in Reaktion auf eine Ermittlung, dass eine bestimmte Zertifizierungsstelle eventuell kompromittiert worden ist; und
Verifizieren, durch die Prozessoreinheit (804), der Daten (106) für die Verwendung in dem Flugzeug (102) unter Verwendung einer ausgewählten Anzahl von der Vielzahl von digitalen Zertifikaten (118) durch das Ermitteln, ob wenigstens eine festgelegte Anzahl von der ausgewählten Anzahl von der Vielzahl von digitalen Zertifikaten (118) gültig ist;
wobei die festgelegte Anzahl durch die Quorum-Regel definiert ist.

2. Verfahren nach Anspruch 1, wobei die Vielzahl von digitalen Zertifikaten (118) von einer Vielzahl von Zertifizierungsstellen (126) stammt und das Verfahren des Weiteren das Auswählen der ausgewählten Anzahl von der Vielzahl von digitalen Zertifikaten (118) unter Verwendung einer Liste von zulässigen Zertifizierungsstellen (138) aufweist.

3. Verfahren nach Anspruch 1, das des Weiteren Folgendes aufweist:
Auswählen der Quorum-Regel (144) aus einer Vielzahl von Quorum-Regeln (142) auf der Basis eines Systems in dem Flugzeug (102), in dem die Daten (106) verwendet werden.

4. Verfahren nach Anspruch 1, das des Weiteren Folgendes aufweist:
Auswählen der Quorum-Regel (144) aus einer Vielzahl von Quorum-Regeln (142) auf der Basis einer Position des Flugzeugs (102).

5. Verfahren nach Anspruch 1, wobei die Daten (106) eine Software (108) für die Verwendung in dem Flugzeug (102) aufweisen.

6. Verfahren nach Anspruch 1, wobei die Prozessoreinheit (804) eine Prozessoreinheit (804) in einem Flugzeugnetzwerk-Datenverarbeitungssystem (136) in dem Flugzeug (102) ist.

7. Vorrichtung, die eine Prozessoreinheit (804) aufweist und dazu konfiguriert ist, Folgendes zu implementieren:
ein Datenverifizierungsmodul (134), das dazu konfiguriert ist, eine Vielzahl von digitalen Zertifikaten (118) zu empfangen, die mit Daten (106) für die Verwendung in einem Flugzeug (102) assoziiert sind, eine Quorum-Regel (114) in Reaktion auf eine Ermittlung auszuwählen, dass eine bestimmte Zertifizierungsstelle eventuell kompromittiert worden ist, und die Daten (106) für die Verwendung in dem Flugzeug (102) unter Verwendung einer ausgewählten Anzahl von der Vielzahl von digitalen Zertifikaten (118) durch das Ermitteln, ob wenigstens eine festgelegte Anzahl von der ausgewählten Anzahl von der Vielzahl von digitalen Zertifikaten (118) gültig ist, zu verifizieren;
wobei die festgelegte Anzahl durch die Quorum-Regel definiert ist.

8. Vorrichtung nach Anspruch 7, wobei die Vielzahl von digitalen Zertifikaten (118) von einer Vielzahl von Zertifizierungsstellen (126) stammt, und wobei das Datenverifizierungsmodul (134) des Weiteren dazu konfiguriert ist, die ausgewählte Anzahl von der Vielzahl von digitalen Zertifikaten (118) unter Verwendung einer Liste von zulässigen Zertifizierungsstellen (138) auszuwählen.

9. Vorrichtung nach Anspruch 7, wobei das Datenverifizierungsmodul (134) dazu konfiguriert ist, die Quorum-Regel (144) aus einer Vielzahl von Quorum-Regeln (142) auf der Basis eines Systems in dem Flugzeug (102), in dem die Daten (106) verwendet werden, auszuwählen.

10. Vorrichtung nach Anspruch 7, wobei das Datenverifizierungsmodul (134) dazu konfiguriert ist, die Quorum-Regel (144) aus einer Vielzahl von Quorum-Regeln (142) auf der Basis einer Position des Flugzeugs (102) auszuwählen, und wobei des Weiteren das Datenverifizierungsmodul (134) in einem Flugzeugnetzwerk-Datenverarbeitungssystem (136) in dem Flugzeug (102) implementiert ist.

11. Vorrichtung nach Anspruch 7, wobei die Daten (106) eine Software (108) für die Verwendung in dem Flugzeug (102) aufweisen.

## Revendications

1. Procédé de vérification de données (106) destinées à une utilisation sur un aéronef (102), comprenant :
la réception, par une unité de processeur (804), d'une pluralité de certificats numériques (118) associés aux données (106) ;
la sélection, par l'unité de processeur, d'une règle de quorum (144) en réponse à une détermination qu'une autorité de certificat spécifiée peut avoir été compromise ; et
la vérification, par l'unité de processeur (804), des données (106) destinées à une utilisation sur l'aéronef (102) à l'aide d'un nombre sélectionné parmi la pluralité de certificats numériques (118) en déterminant si au moins un nombre spécifié parmi le nombre sélectionné parmi la pluralité de certificats numériques (118) est valide ;
dans lequel le nombre sélectionné est défini par la règle de quorum.

2. Procédé selon la revendication 1, dans lequel la pluralité de certificats numériques (118) provient d'une pluralité d'autorités de certificats (126) et comprenant en outre la sélection du nombre sélectionné parmi la pluralité de certificats numériques (118) à l'aide d'une liste d'autorités de certificats acceptables (138).

3. Procédé selon la revendication 1, comprenant en outre :
la sélection de la règle de quorum (144) à partir d'une pluralité de règles de quorum (142) sur la base d'un système sur l'aéronef (102) sur lequel les données (106) seront utilisées.

4. Procédé selon la revendication 1, comprenant en outre :
la sélection de la règle de quorum (144) à partir d'une pluralité de règles de quorum (142) sur la base d'un emplacement de l'aéronef (102).

5. Procédé selon la revendication 1, dans lequel les données (106) comprennent le logiciel (108) destiné à une utilisation sur l'aéronef (102).

6. Procédé selon la revendication 1, dans lequel l'unité de processeur (804) est une unité de processeur (804) dans un système de traitement de données de réseau d'aéronef (136) sur l'aéronef (102).

7. Dispositif, comprenant une unité de processeur (804) configurée pour mettre en œuvre :
un module de vérification de données (134) configuré pour recevoir une pluralité de certificats numériques (118) associés à des données (106) destinées à une utilisation sur un aéronef (102), pour sélectionner une règle de quorum (144) en réponse à une détermination qu'une autorité de certificat spécifiée peut avoir été compromise, et pour vérifier les données (106) destinées à l'utilisation sur l'aéronef (102) à l'aide d'un nombre sélectionné parmi la pluralité de certificats numériques (118) en déterminant si au moins un nombre spécifié parmi le nombre sélectionné parmi la pluralité de certificats numériques (118) est valide ;
dans lequel le nombre sélectionné est défini par la règle de quorum.

8. Dispositif selon la revendication 7, dans lequel la pluralité de certificats numériques (118) provient d'une pluralité d'autorités de certificats (126) et dans lequel le module de vérification de données (134) est en outre configuré pour sélectionner le nombre sélectionné parmi la pluralité de certificats numériques (118) à l'aide d'une liste d'autorités de certificats acceptables (138).

9. Dispositif selon la revendication 7, dans lequel le module de vérification de données (134) est configuré pour sélectionner la règle de quorum (144) à partir d'une pluralité de règles de quorum (142) sur la base d'un système sur l'aéronef (102) sur lequel les données (106) seront utilisées.

10. Dispositif selon la revendication 7, dans lequel le module de vérification de données (134) est configuré pour sélectionner la règle de quorum (144) à partir d'une pluralité de règles de quorum (142) sur la base d'un emplacement de l'aéronef (102) et dans lequel en outre le module de vérification de données (134) est mis en œuvre dans un système de traitement de données de réseau d'aéronef (136) sur l'aéronef (102).

11. Dispositif selon la revendication 7, dans lequel les données (106) comprennent le logiciel (108) destiné à une utilisation sur l'aéronef (102).
